# EUROPEAN PATENT APPLICATION

(11) **EP 1 586 878 A1**
(43) Date of publication of application: **19.10.2005**
(21) Application number: 04704741.0
(22) Date of filing: 23.01.2004
(51) Int. Cl.: G01L 1/16

(54) **PRESSURE SENSOR, OBJECT DETECTION DEVICE, OPENING/CLOSING DEVICE, AND METHOD FOR PRODUCING THE PRESSURE SENSOR**

(30) Priority: 24.01.2003 JP 2003016404
(71) Applicant: MATSUSHITA ELECTRIC INDUSTRIAL CO., LTD., Kadoma-shi, Osaka 571-8501 (JP)
(72) Inventor: SUGIMORI, Tooru, shi, Nara 639-1123 (JP); UEDA, Shigeki, Nara 630-1055 (JP); OGINO, Hiroyuki, Nara-shi, Nara 630-8024 (JP)
(74) Representative: Schuster, Thomas
(86) International application number: PCT/JP2004/000607
(87) International publication number: WO 2004/065925

(57) **Abstract**

An object of the invention is to provide a pressure sensor, an object detecting system and an opening and closing system which realize the improvement in efficiency of sealing work on end portions of the pressure sensor and which are fabricated at low costs, as well as a pressure sensor fabricating method which requires no complex and troublesome steps.

A pressure sensor (17) includes a pressure sensing means (a piezoelectric sensor (33)) for detecting a deformation due to an external force and a sensor accommodation body (a support means (35)) which incorporates therein the pressure sensing means and which is made from a thermoplastic elastomer, and the sensor accommodation body is sealed off at at least one end portion thereof through a thermal treatment.

## Description

### <Technical Field>

The present invention relates to a pressure sensor, an object detection devise and an opening/closing devise, and a method for producing the pressure sensor and, more particularly, to an improved technique for ensuring that the sealing of a sensor end portion is implemented through simple work.

### <Background Art>

Conventionally, there have been disclosed a number types of pressure sensors including a pressure switch in which contacts are closed when an unknown pressure is applied thereto and a piezoelectric sensor which employs a piezoelectric element. In the piezoelectric sensor, when the piezoelectric sensor is deformed by being pressed by an object, a voltage pulse is outputted from the piezoelectric sensor by virtue of piezoelectric effect, and whether or not an object is trapped is detected based on the existence of this voltage pulse. When applying these types of pressure sensors to an object trapping preventive means for a powered window system of an automobile, a pressure switch or a piezoelectric sensor is arranged along, for example, a window frame of a door, so that in the event that an object is trapped between the window frame and a window glass, the pressure switch or piezoelectric sensor is made to be deformed by the object: Then, when the window glass is closed, in the event that the pressure switch is closed or a predetermined voltage pulse is outputted from the piezoelectric sensor, it is understood that an object is being trapped, and the rotational direction of an electric motor is reversed so as to release the object from the trapped condition.

Then, with the pressure switch, in order to prevent the infiltration of foreign matters such as water drops, an end portion of the switch is sealed through molding work in which the end portion is set in a mold of a predetermined shape and a thermoplastic synthetic resin having insulating properties is injected into the interior of the mold while being pressurized using a method substantially equivalent to an injection molding or transfer molding (refer to Patent Document No. 1).

In addition, in a pressure switch like what has been described above, when loading a piezoelectric sensor into a support member for supporting the sensor, the pressure sensor was inserted into a sensor accommodation hole formed in the support member, for example, after the inside diameter of the hole had been increased by sending air under pressure into the sensor accommodation hole so as to expand the sensor accommodation hole (refer to Patent Document Nos. 2, 3).
(Patent Document No. 1) JP-A-11-237289
(Patent Document No. 2) JP-A-11-72395
(Patent Document No. 3) TP-A-11-94656

However, since the sealing work done on the pressure switch was the working method equivalent to the injection molding or transfer molding, there was caused a problem that the sealing work required long time to be completed and was inefficient, and hence costs were increased.

In addition, when inserting the pressure sensor into the support member before the sealing work, there was also caused another problem that long time was necessary to send air into the sensor accommodation hole under pressure and equipment such as a squeeze pump was needed, and hence the fabricating work of the pressure sensor was inefficient.

The invention was made in view of the situations, and a primary object thereof is to provide a low-cost pressure sensor, object detecting system and opening and closing system by making efficient the sealing work that is done to seal the end portion of the pressure sensor. In addition, a secondary object of the invention is to provide a pressure sensor fabricating method which requires no complicated and troublesome steps.

### <Disclosure of the Invention>

The objects can be attained by the following configurations.
(1) A pressure sensor including a pressure sensing means for detecting a deformation due to an external force and a sensor accommodation body which is made from a thermoplastic elastomer and which covers an outside of the pressure sensing means, wherein at least one end portion of the sensor accommodation body is sealed off through a thermal treatment.
(2) A pressure sensor as set forth under (1), wherein the pressure sensing means includes a plurality of electrodes which an output signal generated due to deformation is made to leave and a resistor provided portion where a resistor for detecting a disconnection or short-circuit of the electrode is provided, and wherein the resistor provided portion is fixedly sealed off through a thermal treatment at the one end portion of the sensor accommodation body.
(3) A pressure sensor as set forth under (2), wherein the resistor provided portion includes at least one of a recessed portion, a raised portion and a wedge-shaped portion which function to enhance the fixing strength of the resistor provided portion when sealing off the end portion of the sensor accommodation body.
(4) A pressure sensor as set forth under (2), wherein the resistor provided portion includes an insertion hole into which a pin is inserted for enhancing the fixing strength to the sensor accommodation body.
(5) A pressure sensor as set forth under any of (1) to (4), wherein at least one end portion of the pressure sensing means is covered by a cap made from a thermoplastic elastomer, and wherein the cap seals off the end portion of the sensor accommodation body.
(6) A pressure sensor as set forth under any of (1) to (5), wherein the sensor accommodation body is a support means for the pressure sensing means which is secured to a side where the sensor is mounted and fixed, wherein the support means includes a hollow portion which enhances the deformation of the pressure sensing means when an external force is applied, and wherein the hollow portion is sealed off through a thermal treatment at at least one end portion of the support means.
(7) A pressure sensor as set forth under any of (1) to (5), wherein the sensor accommodation body includes a support means which is a covering means for covering the pressure sensing means, which incorporates therein the pressure sensing means covered by the covering means and which is secured to a side where the sensor is mounted and fixed, wherein the support means includes a hollow portion which enhances the deformation of the pressure sensing means when an external force is applied, and wherein the hollow portion is sealed off through a thermal treatment at at least one end portion of the support means.
(8) A pressure sensor as set forth under (7), wherein the whole of at least one end portion of the support means is covered by a cap made from a thermoplastic elastomer, and wherein the cap seals off the end portion when subjected to a thermal treatment.
(9) A pressure sensor as set forth under any of (1) to (8), wherein the pressure sensing means is formed using a composite piezoelectric material resulting from a mixture of chlorinated polyethylene and piezoelectric ceramic powder.
(10) A pressure sensor including a pressure sensing means for detecting a deformation due to an external force and a sensor accommodation body which covers an outside of the pressure sensing means, wherein a lubricant is loaded between the pressure sensing means and the sensor accommodation body.
(11) A pressure sensor as set forth under (10), wherein at least one end portion of the sensor accommodation body is sealed off through a thermal treatment.
(12) An object detecting system including the pressure sensor set forth under any of (1) to (11) and a determination means for determining on the contact of an object based on an output signal of the pressure sensor.
(13) An object detecting system as set forth under (12), wherein the determination means is fixedly sealed off through a thermal treatment at one end portion of a support means.
(14) An opening and closing system including the object detecting system set forth under (12) or (13), a driving means for driving an opening and closing portion and a control means for controlling the driving means in such a manner as to stop a closing operation of the opening and closing portion or to operate the opening and closing portion to be opened when a determination means determines on the contact of an object with a pressure sensor when the opening and closing portion is operated to be closed.
(15) A pressure sensor fabricating method including a pressure sensing means for detecting a deformation due to an external force and a sensor accommodation body which covers an outside of the pressure sensing means, the pressure sensor fabricating method including the steps of making a lubricant adhere to at least either a surface of the pressure sensing means or an internal surface of the sensor accommodation body and inserting the pressure sensing means into the interior surface of the sensor accommodation body.
(16) A pressure sensor fabricating method as set forth under (15), wherein at least one end portion of the sensor accommodation body is sealed off through a thermal treatment after the insertion of the pressure sensing means into the sensor accommodation body.
(17) A pressure sensor fabricating method as set forth under (15) or (16), wherein either zinc stearate or calcium carbonate is used as the lubricant.

### <Brief Description of the Drawings>

Fig. 1 is an external view of an object detecting system having a pressure sensor according to the invention and an opening and closing system;
Fig. 2 a sectional view taken along the line A-A in Fig. 1 which shows constructions of the object detecting system and the opening and closing system;
Fig. 3 is a cross-sectional view showing the construction of a piezoelectric sensor;
Fig. 4 is an external view of the piezoelectric sensor;
Fig. 5 is a block diagram of the object detecting system and the opening and closing system;
Fig. 6 is an explanatory drawing which shows a condition of the pressure sensor resulting when an object enters between a window frame and a window glass to be trapped therebetween;
Fig. 7 shows characteristic charts depicting an output signal from a filter module, a determination output from a determination means and a voltage applied to a motor, respectively;
Fig. 8 shows explanatory drawings, in which (a) depicts a state before sealing work is implemented on an end portion f the pressure sensor, (b) depicts a state in which sealing is implemented through vertical heating and pressurization and (c) depicts a state in which sealing is implemented through horizontal heating and pressurization, respectively;
Fig. 9 shows external views of support means, in which (a) is a perspective view showing a support means in which both end portions are open, and (b) is a perspective view of a support means in which a sensor accommodation hole is formed in one end portion thereof and a hollow portion therein is closed at the other end;
Fig. 10 is a sectional view showing the construction of a resistor provided portion according to a first example;
Fig. 11 is a sectional view showing a condition in which the resistor provided portion shown in Fig. 10 is inserted and thermally bonded in the sensor accommodation hole in the support means;
Fig. 12 is a sectional view showing the construction of a resistor provided portion according to a second example;
Fig. 13 shows drawings depicting the construction of a resistor provided portion according to a third example, in which (a) is a sectional view of the resistor provided portion and (b) is a cross-sectional view taken along the line B-B in (a);
Fig. 14 shows drawings depicting a condition in which the resistor provided portion shown in Fig. 13 is inserted into the sensor accommodation hole in the support means, in which (a) is an explanatory drawing which shows a state before the insertion and (b) shows a state in which the resistor provided portion is secured with a pin after the insertion;
Fig. 15 shows drawings depicting the construction of a resistor provided portion according to a fourth example, in which (a) is a sectional view of the resistor provided portion and (b) is a side view thereof;
Fig. 16 shows drawings depicting a condition in which the resistor provided portion shown in Fig. 15 is inserted into the sensor accommodation hole in the support means, in which (a) is an explanatory drawing showing a state before the insertion and (b) is an explanatory drawing showing a state after the insertion;
Fig. 17 shows drawings depicting a condition in which heat seal is implemented by filling a thermal plastic elastomer in the sensor accommodation hole in the support means, in which (a) is a sectional view showing a state before the heat seal and (b) is a sectional view showing a state after the heat seal;
Fig. 18 shows drawings depicting a condition in which the resistor provided portion, which is caused to protrude from the sensor accommodation hole in the support means, is covered by a cap for heat sealing, in which (a) is a partially sectional view showing a state before the cap is mounted, (b) is a partially sectional view showing a state after the cap has been mounted and (c) is a partially sectional view showing a state after a heat seal has been carried out;
Fig. 19 is an external view of the support means shown in Fig. 18 which shows a condition in which a cap is mounted at the other end thereof;
Fig. 20 shows drawings depicting conditions in which a support means and a piezoelectric sensor are integrally extrusion molded and end portions thereof are sealed off, in which (a) is an external view showing a state in which a support means is cut out, (b) is an external view showing a state in which end portions of the support means are cut, (c) is an external view showing a state in end portions of a piezoelectric sensor are treated, and (d) is an external view showing a state in which the end portions of the piezoelectric sensor are covered by caps;
Fig. 21 is a sectional view showing a sealing construction on the resistor provided portion side;
Fig. 22 is a sectional view showing a sealing construction on the determination means side;

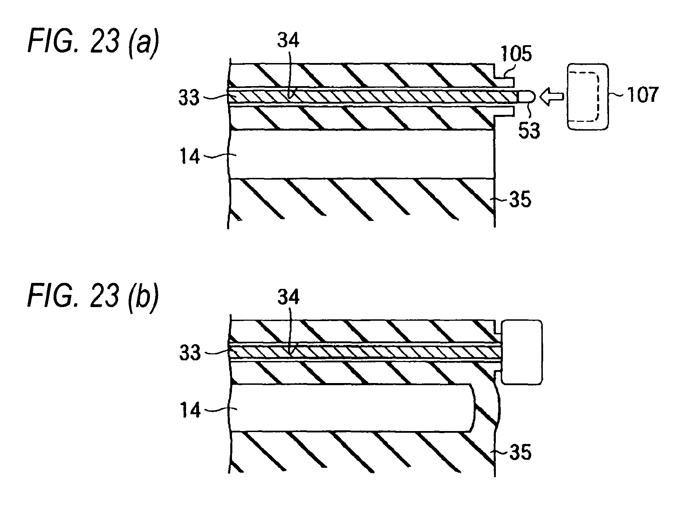

Fig. 23 shows explanatory drawings depicting conditions in which a cap is fitted on a cap mounting allowance formed at an end portion of the support means and is then thermally bonded thereto, in which (a) is a sectional view showing a state before the sealing and (b) is a sectional view showing a state after the sealing;
Fig. 24 is a cross-sectional view showing an example of a pressure sensor installed in a support means having no hollow portion for enhancing a variation of the sensor;
Fig. 25 is a drawing showing the overall construction of a pressure sensor which constitutes one form of the pressure sensor having the cross-sectional construction shown in Fig. 24;
Fig. 26 is a cross-sectional view of a piezoelectric sensor in which no covering layer is provided and hence an external electrode is exposed;
Fig. 27 shows drawings depicting constructions of the piezoelectric sensor shown in Fig. 26 resulting from conditions in which the piezoelectric sensor is coated with a coating means, in which (a) is a sectional view showing that both end portions the coating means are open and (b) is a sectional view showing that one end portion of the coating means is closed; and

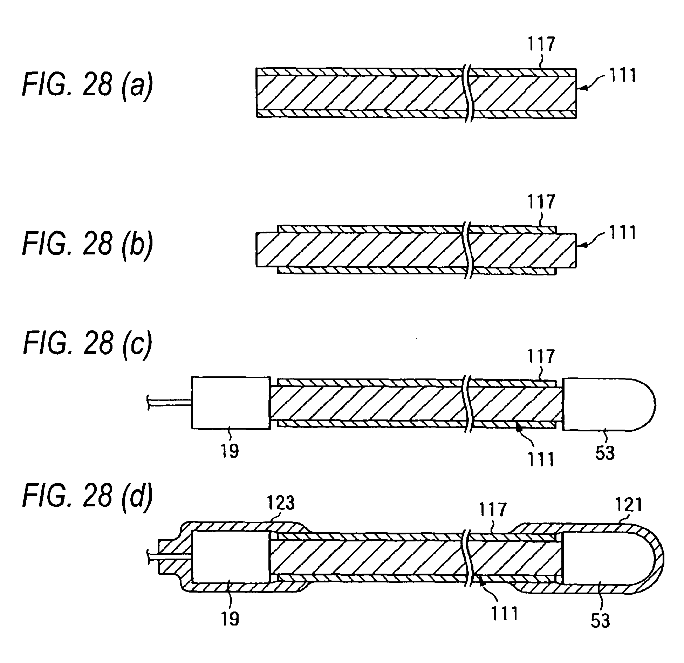

Fig. 28 shows explanatory drawings depicting conditions in which a coating means and a piezoelectric sensor are integrally extrusion molded and end portions are sealed off, in which (a) is a sectional view depicting a state in which a piezoelectric sensor on the surface of which a coating means is formed is cut to a predetermined length, (b) is a sectional view depicting a state in which the coating means is cut at end portions of the piezoelectric sensor, (c) is a sectional view depicting a state in which the end portions of the piezoelectric sensor are treated, and (d) is a sectional view depicting a state in which the end portions are sealed off by caps.

Note that in the drawings, reference numerals denote: 13 a widow frame (an opening); 15 a window glass (an opening and closing portion); 17 a pressure sensor; 19 a determination means; 21 a driving means; 23 a control means; 25 a motor; 33, 111 piezoelectric sensors; 34 a sensor accommodation hole; 35, 36 support means; 41 a hollow portion; 43 a side wall portion; 45 a center electrode; 47 an external electrode; 49 a composite piezoelectric material layer; 51 a covering layer; 53 a resistor provided portion; 55 a disconnecting detecting resistor; 63 a determination module; 73 a control module; 75 an opening and closing switch; 77 an object; 81 a conductive cap; 81b a locking piece (a wedge-shaped portion); 83 an irregular portion; 83a a raised portion; 83b a recessed portion; 85, 87 insulating resins; 89, 91 insertion holes; 93 a pin; 95 a plug material; 97, 98, 101, 103, 107, 121, 123 caps; 113, 115, 117 coating means; 100 an object detecting system; and 150 an opening and closing system.

### <Best Mode for Carrying out the Invention>

Hereinafter, preferred embodiments of a pressure sensor, an object detecting system and an opening and closing system, and a pressure sensor fabricating method according to the invention will be described in detail by reference to the drawings.

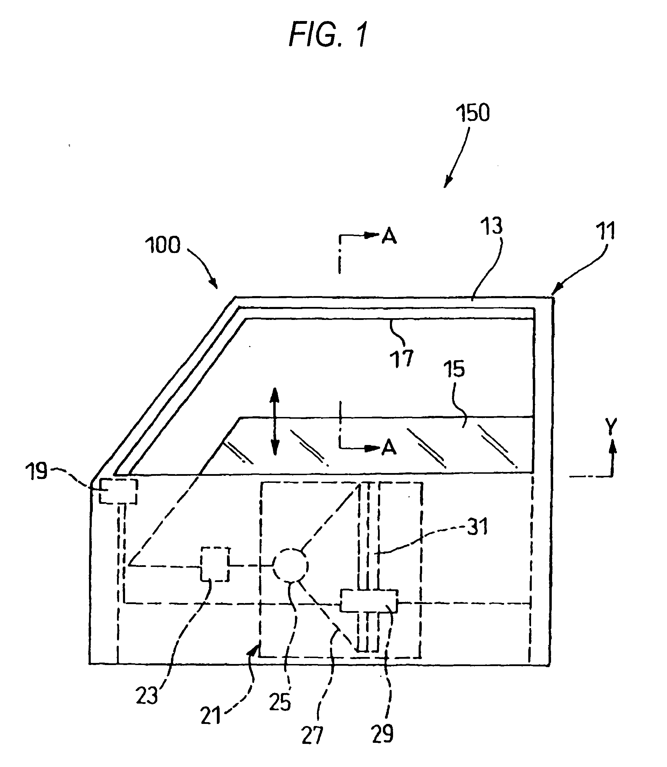

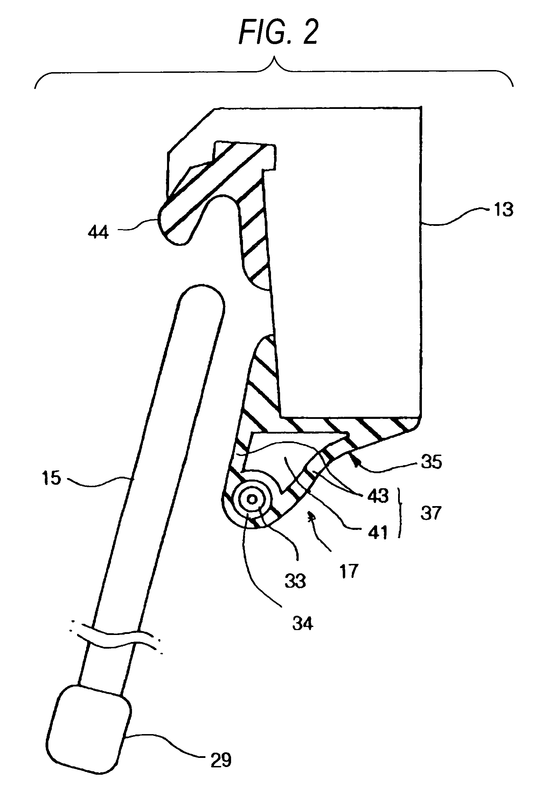

Fig. 1 is a drawing showing external views of an object detecting system 100 having a pressure sensor according to the invention and an opening and closing system 150 when they are used as part of a powered window system of an automobile as one of application examples of the invention. Fig. 2 is a sectional view taken along the line A-A in Fig. 1. Note that in Fig. 2, a right-hand side of the drawing represents the inside of a passenger compartment, whereas a left-hand side thereof represents the outside of the passenger compartment.

Firstly, the basic construction of the object detecting system 100 of the embodiment is as follows. From Fig. 1, reference numeral 11 denotes a door of an automobile, reference numeral 13 denotes a window frame as an opening, and reference numeral 15 denotes a window glass as an opening and closing potion. Reference numeral 17 denotes a pressure sensor and is provided along a perimetric edge of an end portion of the window frame 13. Reference numeral 19 denotes a determination means for determining on the contact of an object to the pressure sensor 17 based on an output signal of the pressure sensor 17.

In addition, the opening and closing system 150 of the embodiment includes the object detecting system 100, a driving means 21 for opening and closing the window glass 15 and a control means 23 for controlling the driving means 21. Here, the driving means 21 includes a motor 25, a wire 27, a support device 29 for the window glass 15, a guide 13 and the like and is constructed such that the wire 27 is moved by the motor 25, so that the support device 29 linked with the wire 27 is moved up and down vertically along the guide 31, whereby the window glass 15 is opened and closed. Note that the driving means 21 is not limited to the one in which the wire 27 is used but driving means of other types may be adopted. In addition, the control means 23 and the motor 25 may be integrated into a single unit.

As shown in Fig. 2, the pressure sensor 17 of the embodiment has a flexible piezoelectric sensor 33 as a pressure sensing means and a support means 35 as a sensor accommodation body. The support means 35 is provided with a deformable portion 37 which incorporates therein the piezoelectric sensor 33 at a sensor accommodation hole 34 situated in the vicinity of a lowermost portion thereof and which is secured to the window frame 13. This deformable portion 37 has a hollow portion 41 and a side wall portion 43. In addition, the support means 35 including the deformable portion 37 is made of a thermoplastic elastomer (TPE) and has a characteristic that it is softer than the piezoelectric sensor 33. Note that the deformable portion 37 may be integrated into a weatherstrip provided on the window frame 13. The pressure sensor 17 may be constructed not only to be provided on the side of the opening but also to be provided on the side of the opening and closing portion.

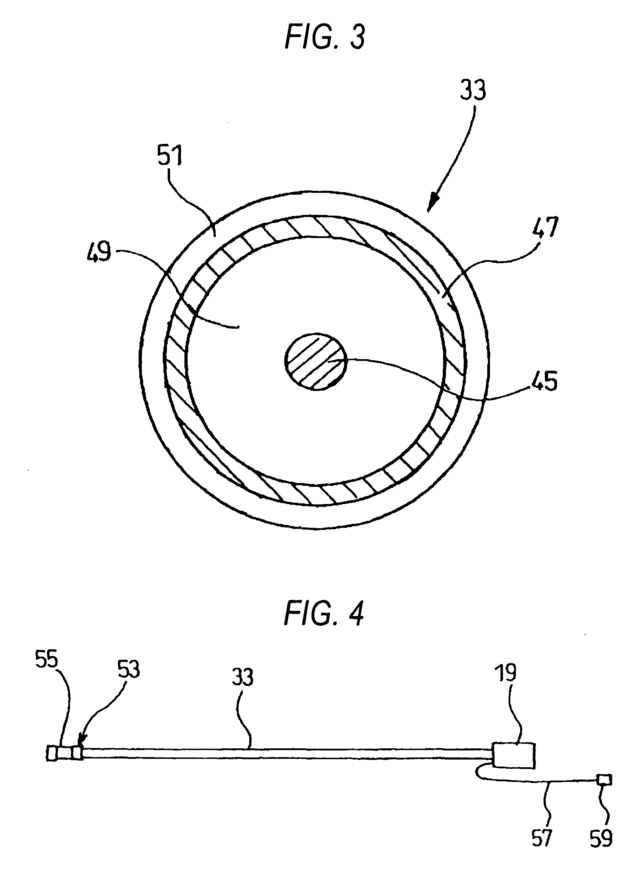

Fig. 3 is a cross-sectional view showing the cross-sectional construction of the piezoelectric sensor 33. The piezoelectric sensor 33 is made up of a center electrode 45 functioning as an electrode which a signal is caused to leave, an external electrode 47, a composite piezoelectric material layer 49 which is made from a composite piezoelectric material resulting from a mixture of a rubber elastic material of chlorinated polyethylene and a sintered powder of piezoelectric ceramic and a covering layer 51, which are laminated concentrically so as to be formed into a cable-like shape and are then polarization treated, and the piezoelectric sensor 33 so made up has a superior flexibility and generates an output signal according to the acceleration of a deformation. Sintered powders of leadless piezoelectric ceramic of, for example, lead titanate or lead titanate-zirconate, bismuth-sodium titanate, sodium niobate and potassium niobate are used as piezoelectric ceramic. The piezoelectric sensor 33 is fabricated via the following steps. Firstly, a chlorinated ethylene sheet and a (40 to 70) vol% piezoelectric ceramic (here, lead titanate-zirconate) are uniformly mixed together into a sheet-like shape via a rolling process. This sheet is cut minutely into pellets, and thereafter, these pellets are continuously extruded together with a center electrode 45 to thereby form a composite piezoelectric material layer 49. Then, an external electrode 47 is wound around the composite piezoelectric material layer 49. A covering layer 51 is also continuously extruded in such a manner as to surround the external electrode 47. Finally, a direct current high voltage of (5 to 10)kV/mm is applied between the center electrode 45 and the external electrode 47 so as to polarize the composite piezoelectric material layer 49.

When adding the piezoelectric ceramic powder to the chlorinated ethylene, the piezoelectric ceramic powder is preferably submerged in a solution of a titanium coupling agent and is then dried in advance. By being treated like this, the surface of the piezoelectric ceramic powder is covered with a hydrophilic group and a hydrophobic group which are contained in the titanium coupling agent. The hydrophilic group prevents the aggregation of piezoelectric ceramic powders, and the hydrophobic group enhances the wetting characteristics between chlorinated polyethylene and piezoelectric ceramic powder. As a result, the piezoelectric ceramic powder can be added uniformly to the chlorinated polyethylene in a large amount up to a maximum of 70 vol%. It has been found that a similar effect to what has just been described can be obtained by adding the titanium coupling agent while chlorinated polyethylene and piezoelectric ceramic powder are being rolled, in place of submerging the piezoelectric ceramic powder in the titanium coupling agent. This treatment is superior in that the submerging treatment in the titanium coupling agent is required particularly. Thus, chlorinated polyethylene also plays a role of a binder resin when piezoelectric ceramic powder is mixed. Note that a non-halogen material such as a thermoplastic elastomer may be used in place of chlorinated polyethylene.

While a normal metallic single-wire conductor such as a copper wire or a stainless steel wire or a plurality of stranded conductors may be used for the center electrode 45, here, an electrode is used in which a metallic coil is wound around the circumference of an insulating polymer fiber. As the insulating polymeric fiber and the metallic coil, a polyester fiber which is commercially available in an electric blanket and a copper alloy containing 5 wt% of silver are preferable.

A belt-like electrode in which a metallic film is bonded onto a polymeric layer is used for the external electrode 47 and the external electrode 47 so formed is made to be wound around the circumference of the composite piezoelectric material layer 49. Then, polyethylene terephthalate (PET) is used as the polymeric layer, and since an electrode in which an aluminum film is bonded onto polyethylene terephthalate has a high thermal stability at 120°C and is mass produced commercially, it is preferable to use the electrode as the external electrode 47. In connecting this electrode to the determination means 19, the electrode can be so connected by virtue of, for example, crimping or using a grommet. In addition, a construction may be possible in which a metallic single-wire coil or a metallic braided wire is wound around the aluminum film of the external electrode 47 so as to establish a conductivity therebetween, and the metallic single-wire coil or the metallic braided wire is soldered to the determination means 19. In this case, since soldering becomes possible, the working efficiency can be promoted. In addition, a belt-like electrode may be used in which a copper film is formed on the PET layer, which enables soldering. Note that the external electrode 47 is preferably wound around the composite piezoelectric material layer 49 in such a manner as to partially overlap in order to shield the piezoelectric sensor from electric noise of the external environment.

While vinyl chloride or polyethylene may be used as the covering layer 51, an elastic material such as a synthetic rubber and a thermoplastic elastomer which are superior in pliability and flexibility may be used so as to facilitate the deformation of the piezoelectric sensor 33 when pressed by an object. By adopting the constructions that have been described heretofore, the minimum radius of curvature of the piezoelectric sensor can be decreased to 5mm. Note that the support means 35 may be made to double as the covering layer 51, and as this occurs, the rationalization of components and fabrication steps can be realized.

As has been described heretofore, since the composite piezoelectric material of the piezoelectric sensor has both the flexibility provided by chlorinated polyethylene and the high-temperature durability provided by piezoelectric ceramic, the reduction in sensitivity at high temperatures inherent in a conventional piezoelectric sensor using polyvinylidene fluoride as the piezoelectric material can be eliminated, and since not only the durability at high temperatures is superior but also no vulcanization step is required at the time of molding which is required in the case of a rubber such as EPDM, there can be obtained an advantage that the production efficiency is improved.

Fig. 4 is an external view of the piezoelectric sensor 33, and a resistor provided portion 53, which incorporates therein a resistor for detecting a disconnection and a short-circuit, is provided at one end portion of the piezoelectric sensor 33. The outside diameter of the resistor provided portion 53 is made to be substantially equal to the outside diameter of the covering layer 51 of the piezoelectric sensor 33, and the incorporated resistor is connected between the center electrode 45 and the external electrode 47. The resistor doubles as a discharge module which discharges electrical charges that are generated in the piezoelectric sensor 33 by virtue of pyroelectric effect, which realizes the rationalization of components. The piezoelectric sensor 33 is directly connected to the determination means 19, and the piezoelectric sensor 33 and the determination means 19 are made integral with each other. In addition, a cable 57 for supplying power supply and outputting a detection signal and a connector 59 are connected to the determination means 19. When providing the piezoelectric sensor 33 in the support means 35, the resistor provided portion 53, which incorporates therein the resistor, is formed at one end portion, and the piezoelectric sensor 33 is inserted into the sensor accommodation hole 34. Thereafter, the piezoelectric sensor 33 and the determination means 19 are connected to each other so as to be made integral with each other. Alternatively, the piezoelectric sensor 33 may be inserted into the sensor accommodation hole 34 in the support means 35 after the resistor provided portion 53 and the determination means 19 have been connected to the end portions of the piezoelectric sensor 33, respectively.

Here, when inserting the piezoelectric sensor 33, a method is taken in which the piezoelectric sensor 33 is inserted after a lubricant is applied to at least either the piezoelectric sensor 33 or the sensor accommodation hole 34. When this method is adopted, the piezoelectric sensor 33 can be smoothly inserted into the sensor accommodation hole 34 by the action of the lubricant, whereby the production efficiency can be improved without needing additional labor hours and adding any new equipment.

Namely, as a fabricating method of this pressure sensor, the following steps only have to be implemented in the order in which the steps are describe: a step of applying a lubricant to at least either the surface of the pressure sensing means or the internal surface of the sensor accommodation body; a step of inserting the pressure sensing means into the internal wall of the sensor accommodation body; and sealing off at least one end portion of the sensor accommodation body through a thermal treatment.

In addition, as the lubricant, it is possible to use zinc stearate and calcium carbonate, which are used as a lubricant when extrusion molding rubber and a lubricant for preventing the bonding of rubbers. Note that the lubricant is not limited to those materials described above but may be selected from appropriate materials as required within such an extent that materials used for the covering layer and the piezoelectric sensor are not deteriorated.

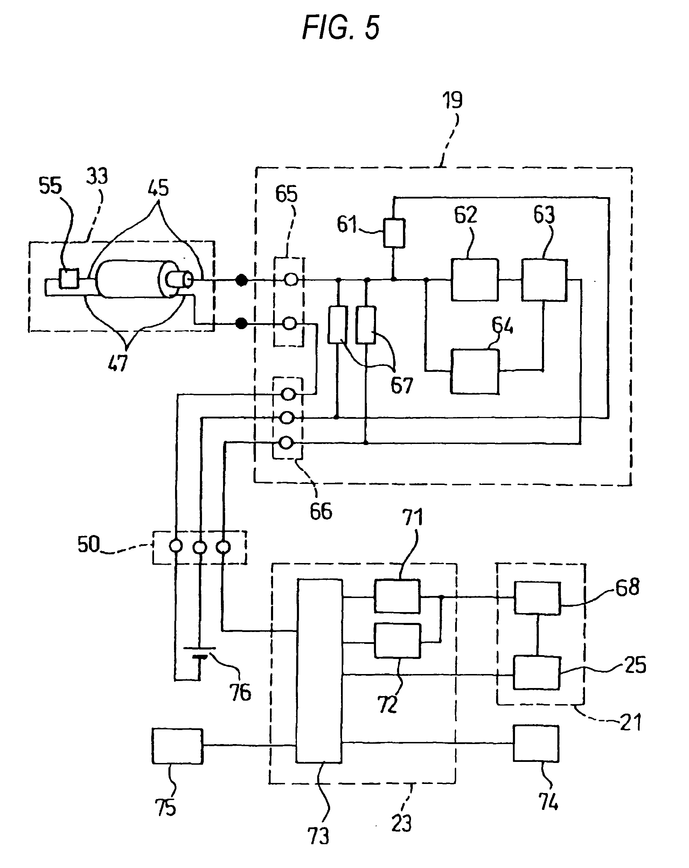

Fig. 5 is a block diagram of the object detecting system and the opening and closing system according to the embodiment. The determination means 19 includes a voltage dividing resistor 61 for use in detecting a disconnection of the pressure sensor 17, a filter module 62 for allowing the passage of only a predetermined frequency constituent from an output signal from the piezoelectric sensor 33, a determination module 63 for determining on the contact of an object to the pressure sensor 17 based on an output signal from the filter module 62 and an abnormality determination module 64 for determining on the disconnection abnormality of the center electrode 45 and the external electrode 47 of the piezoelectric sensor 33 from a voltage value that is formed by the disconnection detecting resistor 55 and the voltage dividing resistor 61.

In addition, a signal input module 65, which connects the center electrode 45 and the external electrode 47 to the determination means 19 and inputs an output signal from the piezoelectric sensor 33 into the determination means 19, and a signal output module 66, which outputs a determination signal from the determination module 63, are provided adjacent to each other within the determination means 19. A power supply line to the determination means 19 and a ground line are also connected to the signal output module 66. Furthermore, the determination means 19 has a bypass module 67 such as a capacitor which is provided between the signal input module 65 and the signal output module 66 for bypassing a high-frequency signal.

The respective constituent elements which make up the determination means 19 are fabricated into a single IC chip so as to be installed on a circuit board, and the whole of the circuit board is incorporated into a cylindrical or box-shaped shield case after having been electrically insulated. Then, the shield case electrically continues to the external electrode 47 of the piezoelectric sensor 33, as well as the ground line of the power supply, and the piezoelectric sensor 33 and the determination means 19 are shielded altogether so as to prevent a malfunction by strong electric field noise. A further countermeasures against strong electric field may be carried out by adding a feedthrough capacitor and an EMI filter to an input/output module in the aforesaid circuit.

The driving means 21 has a Hall element 68 for detecting a rotational pulse of the motor 25.

The control means 23 is provided with a position detecting module 71 for detecting an upper end position of the window glass 15 based on an output signal from the Hall element 68, an opening and closing portion contact determination module 72 for determining on the contact of an object to the window glass 15 by detecting the moving speed of the window glass 15 based on an output signal from the Hall element 68 and a control module 73 for controlling the motor 25 based on output signals from the determination means 19, the position detecting module 71 and the opening and closing portion contact determination module 72.

The position detecting module 71 counts and stores pulse signals outputted from the Hall element 68 so as to detect a current upper end position of the window glass 15. Here, The upper end position Y of the window glass 15 is represented by a height from a lowest point of the window frame 13 as shown in Fig. 1.

The opening and closing portion contact determination module 72 calculates the moving speed of the window glass 15 from pulse intervals of pulse signals outputted from the Hall element 68 based on the fact that the moving speed of the window glass 15 slows when an object is brought into contact with the window glass 15 and determines that an object is brought into contact with the window glass 15 in the event that a variation |ΔV_{w}l per unit time of a moving time so calculated becomes greater than a preset value V_{w1} to thereby output pulse signals of Lo -> Hi -> Lo. Here, of the pulse signals so outputted, the signal of Hi level constitutes a determination signal.

In addition, an informing means 74 for informing a result of determination by the determination means 19 via a predetermined light or the like that is arranged on a front panel of a passenger compartment and an opening and closing switch 75 for opening and closing the window glass 15 are connected to the control means 23, and the opening and closing switch 75 includes a one shot up switch and a one shot down switch, which are designed to open and close the window glass via a one-touch operation, and a manual up switch and a manual down switch, which are designed to open and close the window glass 15 by being manually operated. Then, a power supply 76 is provided which is made up of an automotive battery which supplies electric power through the determination means 19.

The filter module 62 has filtering properties in which unnecessary signals which are generated by vibrations or the like of a vehicle body of an automobile are removed from output signals from the piezoelectric sensor 33 and specific frequency constituents which appear in output signals from the piezoelectric sensor 33 are extracted. For the determination of filtering properties, the vibration properties of the vehicle body of the automobile and vibrations of the vehicle body generated when running may only have to be analyzed for optimization.

Next, a basic operation when detecting the contact of an object with the pressure sensor 17 by the object detecting system will be described.

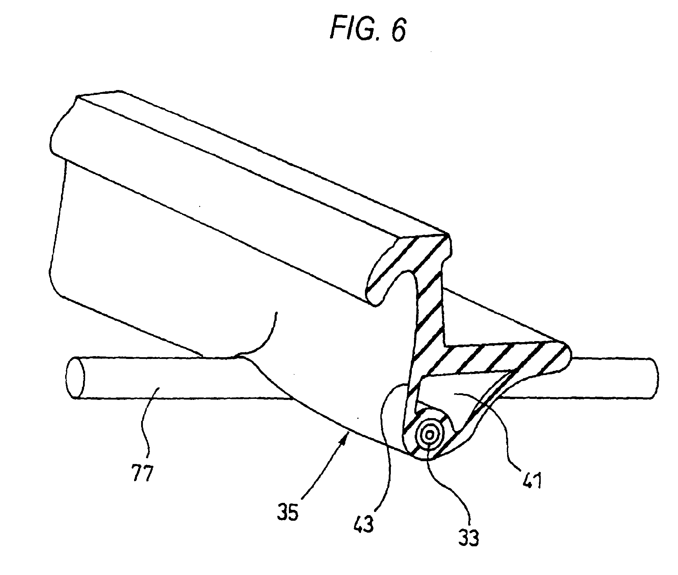

Fig. 6 shows a condition of the pressure sensor 17 resulting when an object 77 enters to be trapped between the window frame and the window glass. When the object 77 is brought into contact with the pressure sensor 17, a pressure by the object 77 is applied to the support means 35 and the piezoelectric sensor 33. Since the support means 35 has more pliability than the piezoelectric sensor 33, the support means 35 is, as shown in the drawing, compressed about a point where the object 77 comes into contact therewith by virtue of the pressure so applied, and the side wall portion 43 deforms, at the same time, the hollow portion 41 being collapsed, whereby the piezoelectric sensor 33 is bent and deformed about the point where the object 77 is brought into contact with the support means 3 5.

When the piezoelectric sensor 33 is deformed like this, an output signal according to the acceleration of deformation is outputted from the piezoelectric sensor 33 due to the piezoelectric effect. An output signal so outputted from the piezoelectric sensor 33 is then filtered by the filter module 62. While there may occur a case where an output signal generated by an unnecessary vibration component attributed to vibrations of the vehicle body of the automobile appears in output signals from the piezoelectric sensor 33, the filter module 62 removes this unnecessary signal.

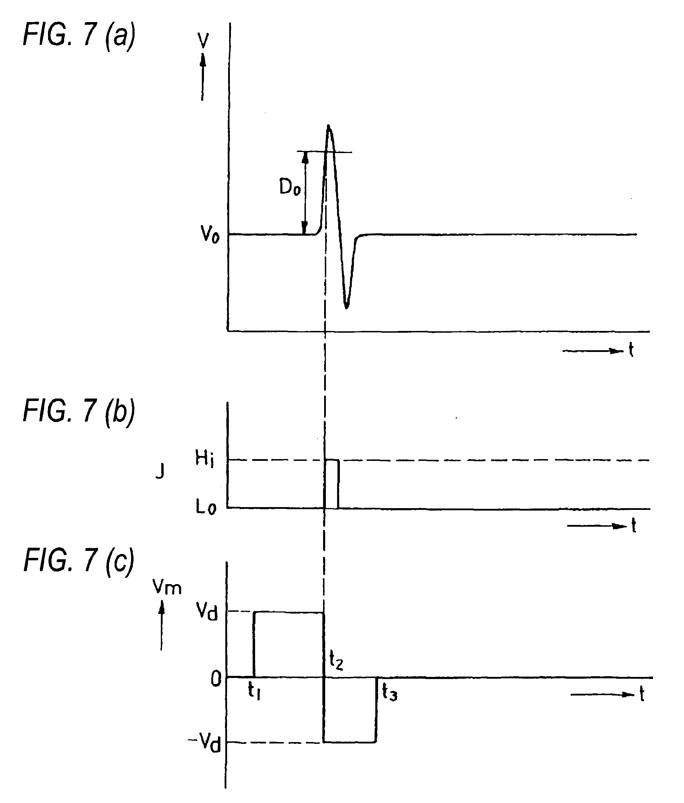

Here, an example of an operating procedure of the determination module 63 and the control module 73 will be described based on Fig. 7. Fig. 7 shows characteristic drawings illustrating an output signal V from the filter module 62, a determination output J of the determination means 19 and an application voltage Vₘ to the motor 25. In Fig. 7, the axes of ordinates represent V, J and Vₘ, respectively, from the top and the axes of abscissas represent time t. When the one shot up switch of the opening and closing switch 75 is switched on at a time t₁, the control module 73 applies a voltage of +V_{d} to the motor 25 so as to operate the window glass 15 to be closed. In the event that the object 77 is trapped as shown in Fig. 6, a signal according to the acceleration of a deformation occurring on the piezoelectric sensor 33 is outputted from the piezoelectric sensor 33 due to the piezoelectric effect, and a signal according to the acceleration of the deformation of the piezoelectric sensor 33 is caused to emerge from the filter module 62. As this occurs, in case the piezoelectric sensor 33 is made to be provided simply on the window frame 13, the deformation of the piezoelectric sensor 33 occurring when a trapping happens would be small. In the case of this embodiment, however, as shown in Fig. 2, since the support means 35 has the pliability and the support means 35 is easily compressed when a trapping happens, the amount of deformation of the piezoelectric sensor 33 is increased.

Then, since the hollow portion 41 is also collapsed while the trapping is occurring, the amount of deformation of the piezoelectric sensor 33 is increased further. Thus, a large amount of deformation of the piezoelectric sensor 33 is obtained, the acceleration, which is a quadratic differential value of deformation amount, becomes large, and as a result of this, an output signal of the piezoelectric sensor 33 becomes large. The determination module 63 determines that a contact with an object occurs in the event that the amplitude |V-V₀| of V from V₀ is larger than D₀, and, as shown in Fig. 7(b), outputs pulse signals Lo -> Hi (determination signal) -> Lo as a determination output at a time t₂.

Given this determination signal, as shown in Fig. 7(c), the control module 73 stops the application of the voltage of+V_{d} to the motor 25 and applies a voltage of-V_{d} for a certain period of time until a time t₃ so as to cause the window glass 15 to drop a certain amount to thereby release the trapping or prevent the occurrence of a trapping. In the event that the pressure to the pressure sensor 17 is removed, a signal according to an acceleration by which the deformation is eliminated to restore an original condition (a signal component that is smaller than a reference potential V₀ in Fig. 7(a)) is outputted from the piezoelectric sensor 33.

Note that while whether V becomes larger or smaller than V₀ when the pressure sensor 17 is deformed changes depending on the bending direction and polarizing direction of the piezoelectric sensor 33, the allocation of electrodes (which to be made as a reference potential) and the supporting direction of the piezoelectric sensor 33, since the determination module 63 determines on a trapping based on an absolute value of the amplitude from V₀ of V, a trapping can be determined whether V is larger or smaller than V₀.

Furthermore, since output signals which are outputted from the piezoelectric sensor 33 as a result of the deformation of the pressure sensor 17 have different polarities depending on whether a deformation is generated or the deformation so generated is removed to restore an original condition, it is possible to detect a contact of an object to the pressure sensor 17 from the initiation to termination of the contact, whereby the operation of the window glass can be forcibly stopped, for example, while the trapping of an object is occurring and can be resumed after the trapping has been eliminated.

Next, sealing work on an end portion of the pressure sensor 17 will be described.

The support means 35 of the embodiment is made from thermoplastic elastomer. The thermoplastic elastomer is one of soft synthetic resins and is a polymeric material having rubber-like elasticity in a cold condition, and the composition thereof is such that a crosslinked rubber is dispersed in a resin. Since thermoplastic elastomer needs no vulcanization step at the time of molding, there can be provided an advantage that a good production efficiency can be obtained. For example, olefin (TPO), styrene (SBC), vinyl chloride (TPVC), urethane (TPU), ester (TPEE), amide (TPAE) and the like are raised as the thermoplastic elastomer.

As a method for incorporating the piezoelectric sensor 33 in the support means 35, as has been described above, there are a method in which a support means 35 is prepared as a single body through extrusion molding or molding and a piezoelectric sensor is inserted into a sensor accommodation hole 34 formed in the support means 35 in a later step, and a method in which a support means 35 and a piezoelectric sensor 33 are extrusion molded at the same time.

Firstly, sealing work on an end portion of a pressure sensor prepared using the former method will be described.

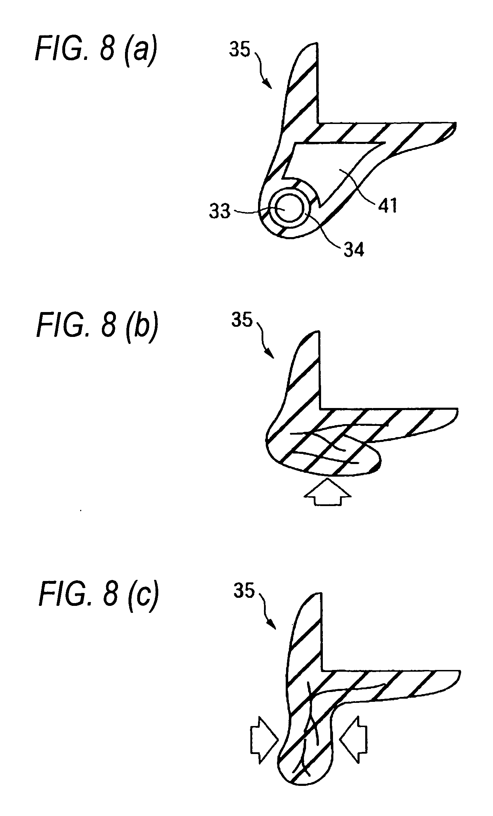

To carry out sealing work, as shown in Fig. 8, an end portion of the support means 35 is sealed off via the heat seal of thermoplastic elastomer by heating and pressurizing (heat treatment) the end portion of the support means 35 with a pressurizing jig. Namely, the sensor accommodation hole and the hollow portion 41 are sealed off by heating the end portion while pressurizing the same from a state before it is sealed off as shown in Fig. 8(a) in a vertical direction as shown in (b) or in a horizontal direction as shown in (c).

The pressurizing direction is selected appropriately depending on a place where the pressure sensor 17 is laid out. In addition, the end portion can also be finished into a desired shape not only by pressurizing the end portion as it is but also by pressurizing the end portion while holding the same in a heating mold. When sealing off the end portion, it is preferable to seal off not only the sensor accommodation hole 34 but also the hollow portion 41. Since the piezoelectric sensor 33 is sealed in the interior of the support means 35 through the sealing by the heat seal, there is no risk that foreign matters such as water drops infiltrate the interior of the support means 35, thereby making it possible to prevent the occurrence a malfunction and corrosion which would otherwise be caused due to the filtration of water drops or the like. In addition, it is possible to prevent the occurrence of a problem of a reduction in sensitivity due to the pressure sensor 17 being difficult to deflect or a failure of the support means 35 which would be caused when water drops infiltrate the interior of the support means 35 to be frozen. Then, since an end portion of the piezoelectric sensor 35 is secured to the support means 35, the piezoelectric sensor 33 can be securely accommodated within the sensor accommodation hole 34 in the support means 35 without any loosening, thereby making it possible to eliminate a risk that the sensitivity of the sensor is reduced at the end portion of the sensor. Furthermore, in the construction that has been described above, the pressure sensor 17 may be constructed to be inserted into the sensor accommodation hole 34 by taking a form in which the covering layer 51, which constitutes an outermost layer, is omitted so that the external electrode 47 is exposed to the outside.

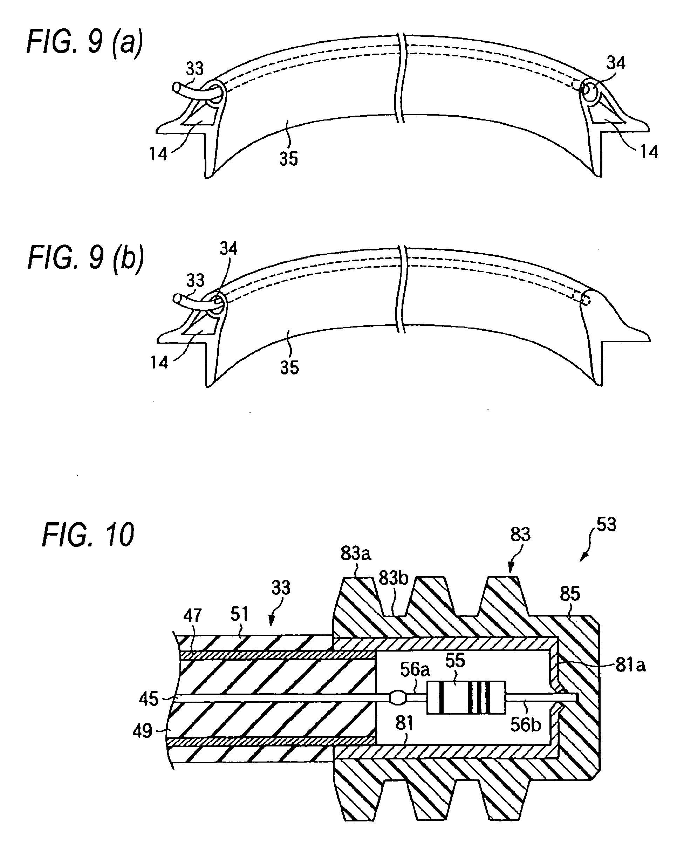

Since the end portion of the support means 35 can be easily sealed off by heat treating the end portion through heating and pressurizing the same, the working efficiency with which the sealing work is implemented on the end portion can be improved largely, whereby an efficient sealing can be carried out at low costs when compared with a processing method which is substantially equivalent to the injection molding and transfer molding. In addition, the support means 35 is not limited to a support means which is made to open at both end portions thereof as shown in Fig. 9(a) but may be a support means in which the sensor accommodation hole 34 and the hollow portion 41 are closed at one end portion thereof. In the latter case, since only one end of the support means 35 needs to be sealed off, the sealing work can be attained while omitting part thereof.

Next, examples of constructions of the resistor provided portion 53 will be described below in which the configuration of the resistor provided portion 53 is improved in order to increase the fixing strength of the resistor provided portion 53 (refer to Fig. 4), which is provided at the end portion of the piezoelectric sensor 33, with respect to the support means 35 when sealing off the end portion of the support means 35.

Fig. 10 is a sectional view illustrating a first example of the construction of a resistor provided portion 53.

The piezoelectric sensor 33 is constructed such that the composite piezoelectric material layer 49 is formed on the surface of the center electrode 45, the external electrode 47 is formed on the surface of the composite piezoelectric material layer 49 in such a manner as to cover the surface, and furthermore, the covering layer 51 is formed around the circumference of the external electrode 47, and the covering layer 51 is partially removed from the end portion of the piezoelectric sensor 33 so as to leave the external electrode 47 exposed thereat. Then, the disconnection detecting resistor 55 is aligned in such a manner that a lead wire direction becomes coaxial with the sensor, and a lead wire 56a situated on a side of the resistor which is closer to the sensor is connected to the center electrode 45. On the other hand, a lead wire 56b situated on an opposite side of the resistor is connected to a bottom portion 81a of a cylindrical conductive cap 81 having a diameter which enables the conductive continuity of the cap with the external electrode 47 at an end portion thereof. An electrical connection between the lead wire 56a and the center electrode 45 and an electrical connection between the lead wire 56b and the conductive cap 81 can be implemented by an appropriate connection means such as welding, brazing and crimping.

The conductive cap 81 is made of a metal or the like, and an insulating resin 85 having a step-like irregular portion 83 is secured to an external surface of the conductive cap along the axial direction of the sensor. The irregular portion 83, which is illustrated as an example, is such that a plurality of raised portions 83a, which protrude radially outwards of the conductive cap 81, and recessed portions 83b are formed along a circumferential direction of the conductive cap 81. Note that in the event that there exists no risk that the resistor provided portion 53 is brought into electrical contact with its surroundings after it has been secured in the support means 35, in place of forming the insulating resin 85, the conductive cap 81 itself may be made to have the irregular portion 83 on an outer circumferential surface thereof.

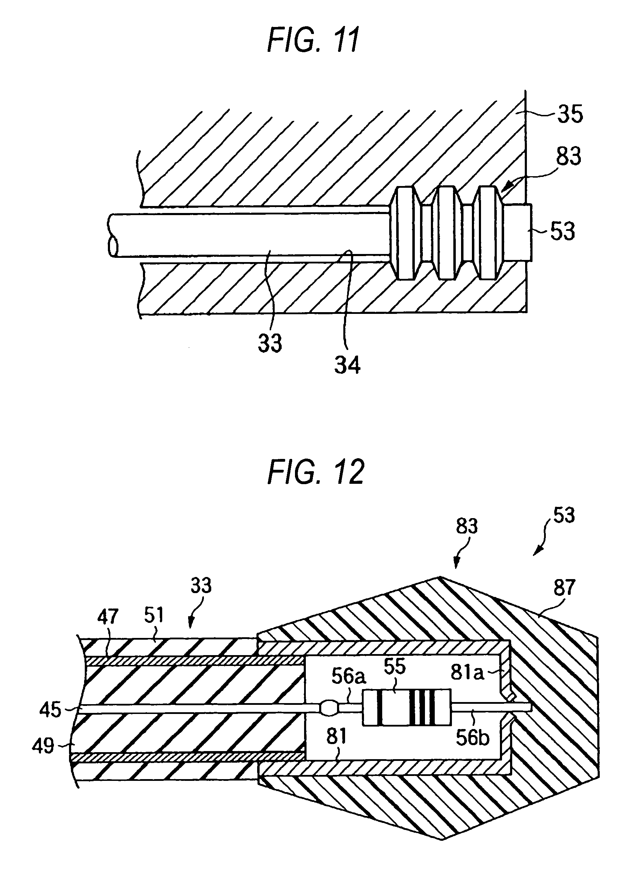

According to the resistor provided portion 53 that is constructed as has been described above, as shown in Fig. 11, when the piezoelectric sensor 33 is inserted into the sensor accommodation hole 34 for heat seal, the irregular portion 83 on the piezoelectric sensor 33 side bites into the sensor accommodation hole 34 to thereby ensure the prevention of the axial slide or dislocation of the piezoelectric sensor 33 within the sensor accommodation hole 34, whereby the piezoelectric sensor 33 can be disposed within the sensor accommodation hole 34 without any loosening, thereby making it possible to enhance the sensitivity of the sensor without dulling the deformation acceleration of the piezoelectric sensor 33 once an object is brought into contact with the piezoelectric sensor 33.

Fig. 12 is a sectional view illustrating a second example of the construction of a resistor provided portion 53. In the following description, like reference numerals are given to like members having like functions to those that have been described above, and the description thereof will be omitted.

In this example of construction, an insulating resin 87 having an angled irregular portion 83 which diametrically expands and contracts along the axial direction of the sensor is secured to an external surface of a conductive cap 81.

Also, according to this construction of the resistor provided portion 53, the irregular portion 83 on the piezoelectric sensor 33 side bites into the sensor accommodation hole 34, whereby it is possible to ensure the prevention of the axial slide or dislocation of the piezoelectric sensor 33 within the sensor accommodation hole 34. In addition, since the shape of the irregular portion 83 is simple, the working of the insulating resin 87 becomes easy. Note that the irregular portion 83 is not limited to the angled one but may be formed into a conical shape which diametrically expands as it extends towards an end portion thereof along the axial direction of the sensor or a conical shape which diametrically contracts as it extends from a diametrically expanded portion towards an end portion thereof, and a similar advantage can be obtained even with either of the conical shapes.

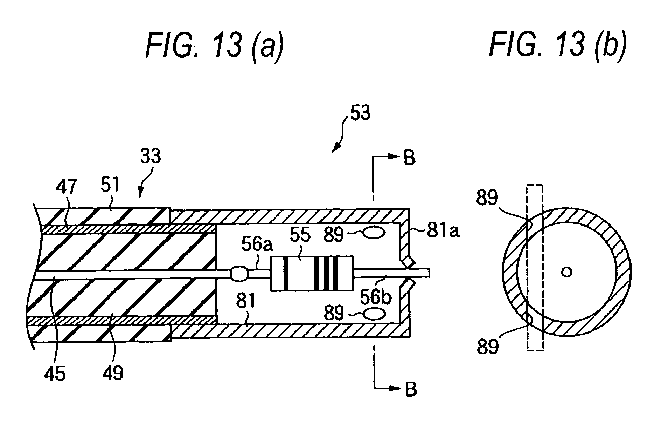

Fig. 13(a) is a sectional view illustrating a third example of the construction of a resistor provided portion 53 and Fig. 13(b) is a cross-sectional view taken along the line B-B in Fig. 13(a).

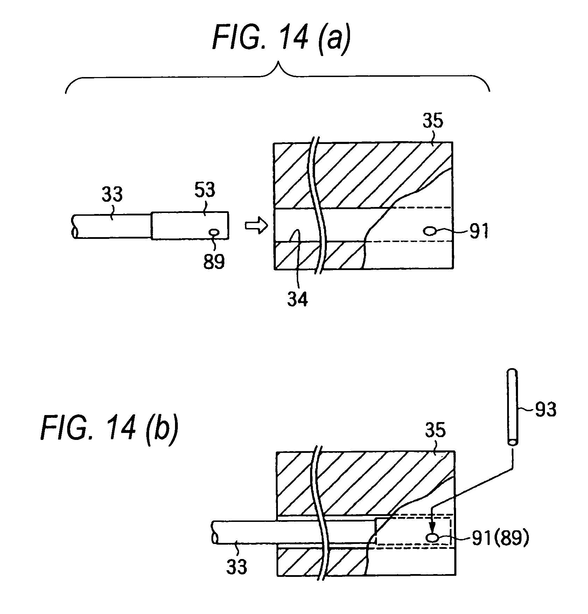

In this example of construction, an insertion hole 89 is provided to be opened in part of an outer circumferential surface of a conductive cap 81 so that a fixing pin is passed through the conductive cap 81 via the insertion hole 89 so provided. According to the resistor provided portion 53 that is constructed as has been described above, an insertion hole 91 is provided to be opened in advance in a position on the sensor accommodation hole 34 in the support means 35 so that the fixing pin is inserted thereinto, as shown in Fig. 14(a), and the insertion holes 89, 91 are aligned with each other, as shown in Fig. 14(b), so that a pin 93 is inserted into the insertion holes 89, 91, whereby the resistor provided portion 53 is fixed to the support means 35 and the piezoelectric sensor 33 can be disposed within the sensor accommodation hole 34 without any loosening, a similar advantage to that described above thereby being provided.

Note that the piezoelectric sensor 33 is inserted into the sensor accommodation hole 34 without providing the insertion hole 91 in the support means 35 side, so that a pin having a sharp point at a distal end thereof may be made to pierce the support means 35 so as to be inserted into the insertion hole 91 of the conductive cap 81. In this construction, the fixing of the resistor provided portion 53 to the support means 35 can be ensured more easily.

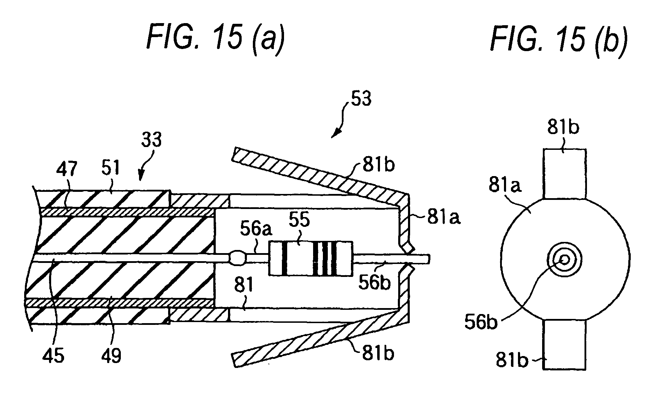

Fig. 15(a) is a sectional view illustrating a fourth example of the construction of a resistor provided portion 53 and Fig. 15(b) is a side view thereof.

In this example of construction, a dislocation preventing locking piece (a wedge portion) 81b is provided on a conductive cap 81 in such a manner as to protrude outwards from a bottom portion 81 side, which functions as a proximal portion, towards a piezoelectric sensor 33 side to thereby be formed into a wedge shape. Here, as an example, part of a circumferential surface of the conductive cap 81 is cut out in the axial direction as a locking piece 81b, and the locking piece 81b is then drawn outwards from the bottom portion 81a side, which functions as a proximal end, whereby the locking piece 81b is formed. Note that while a pair of upper and lower locking pieces 81b are provided in this example, more than two locking pieces or a single locking piece may be provided, and the locking piece so provided may be constructed into a multiplicity of steps developed along the axial direction.

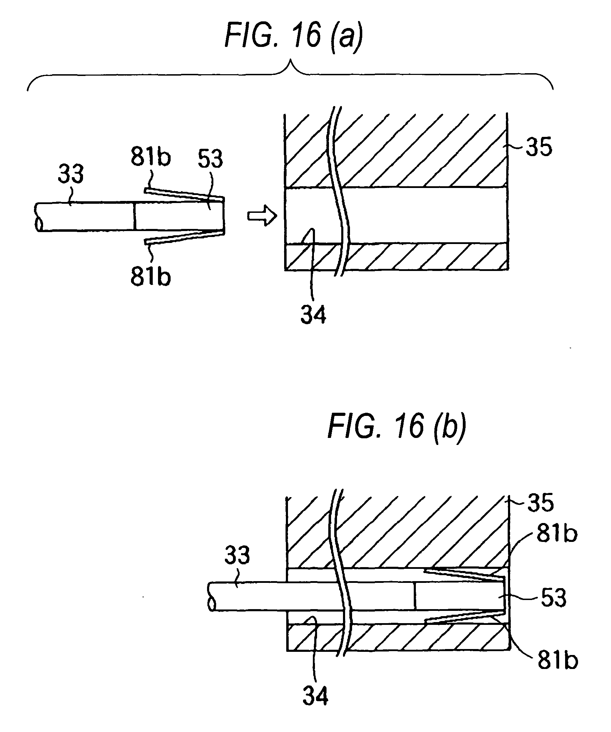

According to the resistor provided portion 53 that is constructed as has been described above, as shown in Fig. 16, when the piezoelectric sensor 33 is inserted into the sensor accommodation hole 34 in the support means 35 for heat seal, the locking pieces 81 bite into the sensor accommodation hole 34 to thereby ensure the prevention of the axial slide or dislocation of the piezoelectric sensor 33 within the sensor accommodation hole 34, whereby a similar advantage to that described above can be provided.

Next, another method will be described in which the resistor provided portion 53 is sealed within the support means 35.

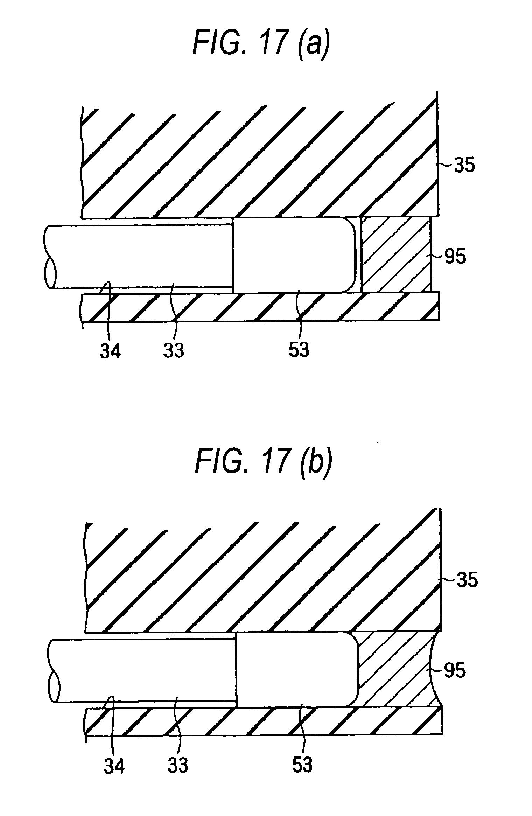

Fig. 17 shows explanatory drawings illustrating how a thermoplastic elastomer is filled in the sensor accommodation hole in the support means for heat seal, in which Fig. 17(a) is a sectional view illustrating a condition before heat seal and Fig. 17(b) is a sectional view illustrating after heat seal.

Here, as shown in Fig. 17(a), while the piezoelectric sensor 33 is inserted into the sensor accommodation hole 34 in the support means 35, a plug material 95 made from thermoplastic elastomer is filled in the sensor accommodation hole 34 in the support means 35 for clogging the sensor accommodation hole 34. When a heat seal is implemented in this state, the plug material 95 clogs the sensor accommodation hole 34 in the end portion of the support means 35 without any gap as shown in Fig. 17(b), and the resistor provided portion 53 at the distal end of the sensor is secured to the plug material 95 and the support means 35 within the support means 35, whereby the piezoelectric sensor 33 can be sealed in the interior of the support means 35 in an ensured fashion through a simple operation.

Furthermore, there exists the following method as another sealing method.

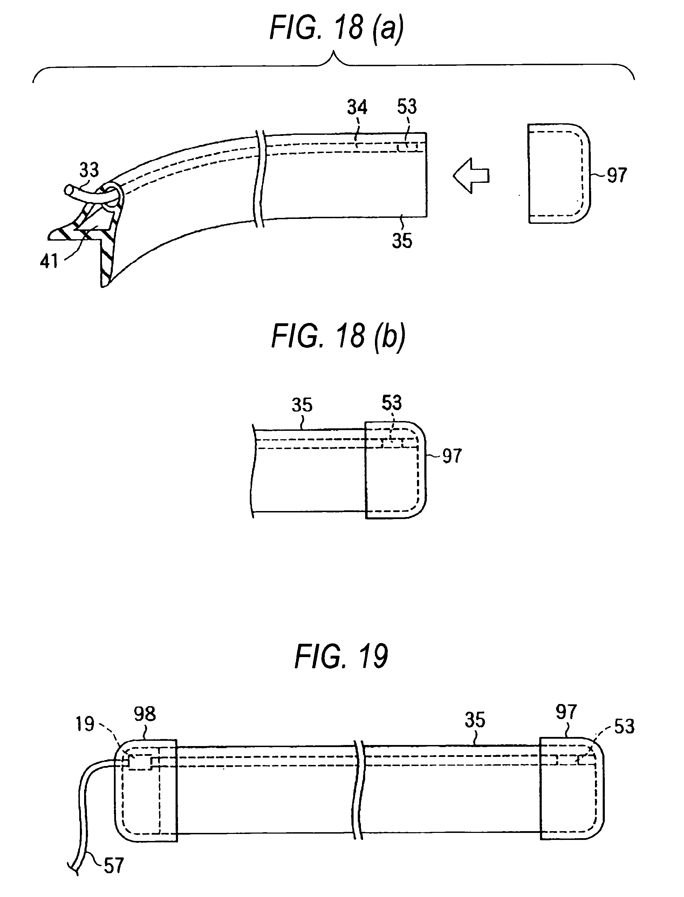

Fig. 18 shows explanatory drawings illustrating how the end portion of the support means is sealed off using a cap made from thermoplastic elastomer.

In a state in which the resistor provided portion 53 is disposed in the sensor accommodation hole 34 as shown in Fig. 18(a), a cap 97 is mounted which is made from thermoplastic elastomer and which covers the whole of the end portion of the support means 35, and a heat seal is implemented on the end portion by heating and pressurizing (a thermal treatment) the vicinity of the cap 97, whereby since the sensor accommodation hole 34 and the hollow portion 41 of the support means 35 are closed in an ensured fashion and the end portion thereof is covered by the cap 97, the bonding strength is enhanced, so that the durability is increased.

In addition, as shown in Fig. 19, the entirety of the pressure sensor can be sealed off by similarly mounting a cap 98 made from thermoplastic elastomer to the other end of the support means 35 in such a manner as to cover the entirety of the relevant end portion

Next, sealing work on an end portion of a pressure sensor prepared by a method for extrusion molding a support member 35 and a piezoelectric sensor 33 together.

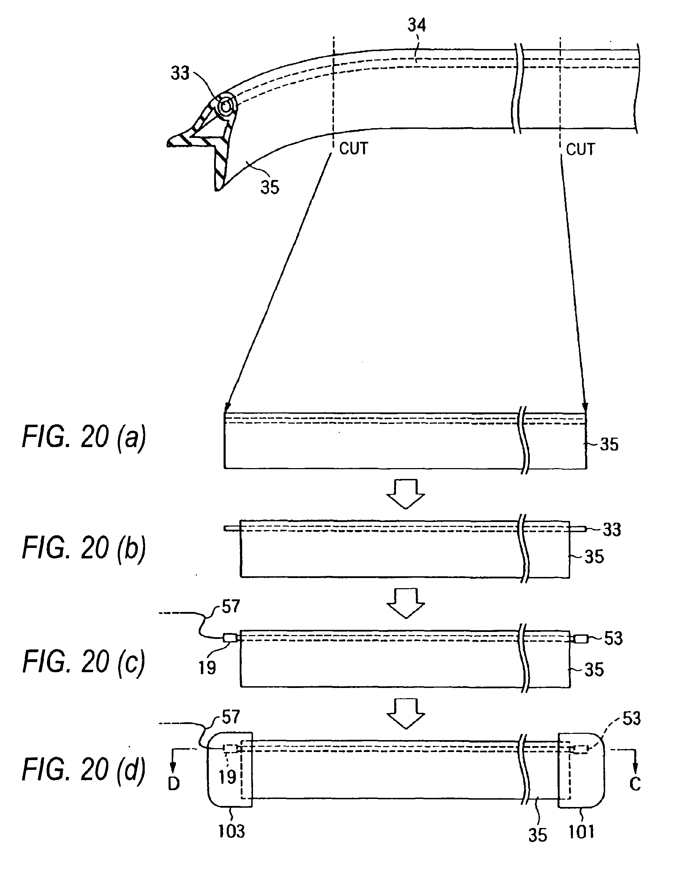

Fig. 20 shows explanatory drawings illustrating a way in which a support means and a piezoelectric sensor are extrusion molded integrally and end portions thereof are sealed off.

As shown in Fig. 20, when a predetermined length is cut out of a support means 35 which is continuously molded in such a state that a piezoelectric sensor 34 is inserted therein so as to prepare a pressure sensor, end portions thereof will be sealed off as follows. Firstly, end portions of a support means 35 which has been so cut out as shown in Fig. 20(a) are cut while the piezoelectric sensor 33 is left as it is as shown in Fig. 20(b), so that the piezoelectric sensor 33 is made to protrude from the sensor accommodation hole 34. Then, as shown in Fig. 20(c), the resistor provided portion 53 and the determination means 19, which are shown in Fig. 4, are mounted on end portions of the protruding piezoelectric sensor 33, and the end portions are sealed off by caps 101, 103, respectively, as shown in Fig. 20(d).

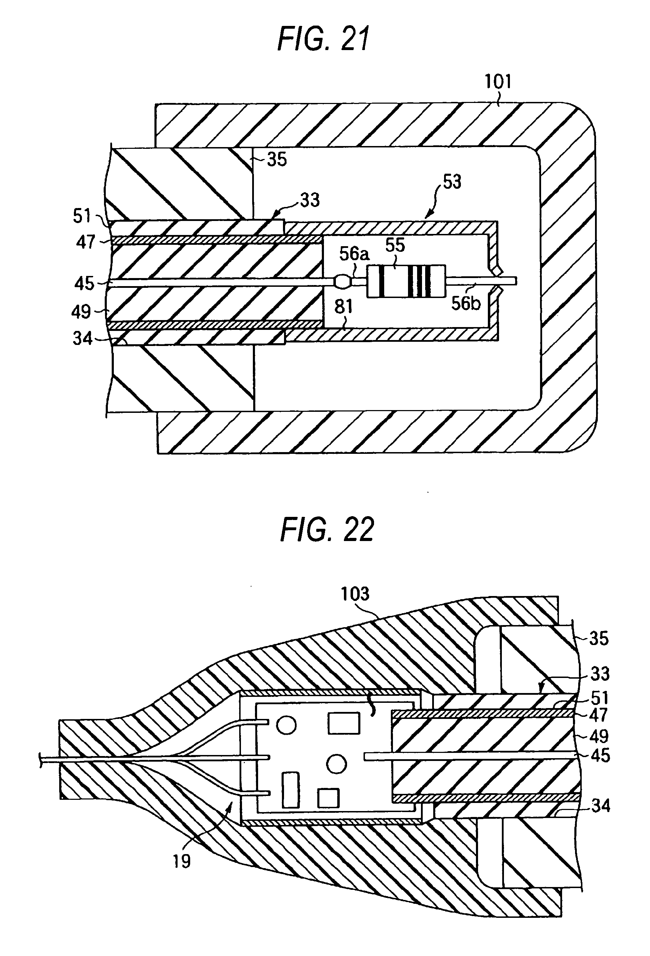

Here, specific sealing constructions will be described by showing a sectional view taken along a direction C in Fig. 20(d) in Fig. 21 and a sectional view taken along a direction D in Fig. 22, respectively. Namely, Fig. 21 is a sectional view illustrating a sealing construction on the resistor provided portion 53 side, whereas Fig. 22 is a sectional view illustrating a sealing construction on the determination means 19 side.

As shown in Fig. 21, on the side of the resistor provided portion 53, the resistor provided portion 53 is mounted on the end portion of the piezoelectric sensor 33 which is made to protrude from the support means 35, and the outside of the resistor provided portion 53 and the whole of the end portion of the support means 35 are covered by the cap 101 made from thermoplastic elastomer for heat seal.

In addition, as shown in Fig. 22, on the side of the determination means 19, the determination means 19 which is formed on the circuit board is mounted on the end portion of the piezoelectric sensor 33 which is made to protrude from the support means 35, and the outside of the determination means 19 and the whole of the end portion of the support means 35 are covered by the cap 103 made from thermoplastic elastomer for heat seal.

Since the sealing work on the end portions by thermal treatment can be implemented simply by virtue of the sealing constructions at the end portions of the piezoelectric sensor that have been described just above, the operation for sealing off the end portions is simplified and hence the reduction in costs can be realized.

In addition, as shown in Fig. 20, the covering layer 51 (refer to Fig. 3) of the piezoelectric sensor 33 can be omitted even in the event that the support means 35 and the piezoelectric sensor 33 are extrusion molded together. Sealing work on end portions of the support means 35 so molded can be implemented in a similar manner to what has been described above. In addition to this method, there is, for example, another method in which when removing an end portion of the support means 35, part of the support means 35 which exists around the sensor accommodation hole 34 is left so as to constitute a cap mounting allowance 105, and an inner circumferential portion of a cap 107 made from thermoplastic elastomer is fitted on the cap mounting allowance 105 for heat seal so that the end portion of the support means 35 can be sealed off. On the other hand, a hollow portion 14 in the support means 35 is heat sealed at the end portion of the support means 35 by heating and pressurizing (thermal treatment) the relevant end portion of the support means 35. By implementing the sealing work on the end portion using the cap 107 which has a small volume, the material can be reduced to thereby realize the reduction in production costs.

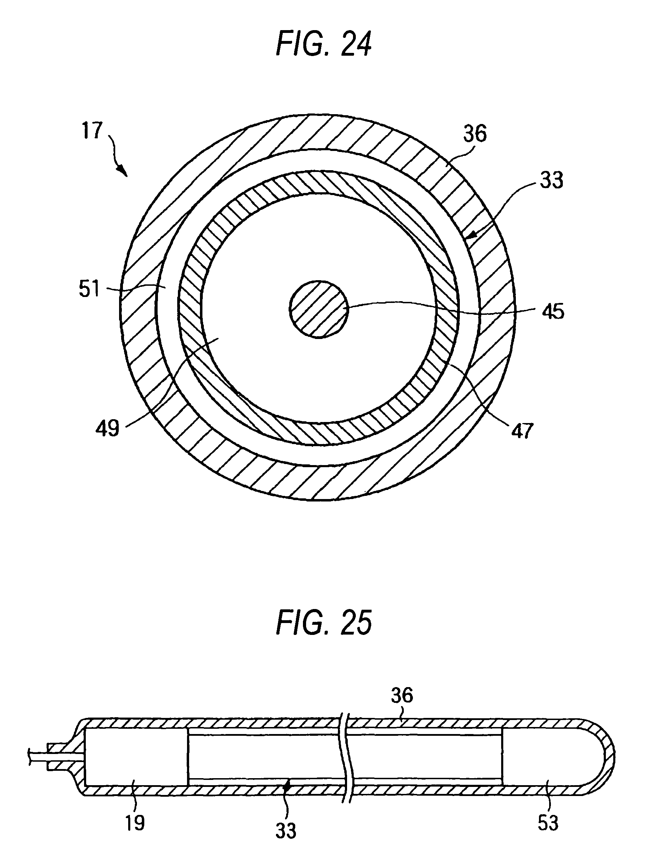

Any of the pressure sensors 17 that have been described heretofore is such as to be incorporated in the support means 35 having the hollow portion 41 which is intended to increase the amount of deformation of the sensor. The application of the pressure sensor according to the invention is not limited to the form of the support means, and the pressure sensor of the invention may be incorporated in a support means which does not have the aforesaid hollow portion 41. An example of a pressure sensor having such a construction is shown in Fig. 24, which is a sectional view. A pressure sensor 17 shown in Fig. 24 is constructed such that a piezoelectric sensor 33 is incorporated in the interior of a support means 36 made from thermoplastic elastomer and having substantially a cylindrical cross section. Fig. 25 is a drawing showing the overall construction of a form of a pressure sensor having the cross sectional construction shown in Fig. 24, in which the pressure sensor is made up by incorporating the piezoelectric sensor 33 to which a resistor provided portion 53 and a determination means 19 are connected in the tubular support means 36 made from thermoplastic elastomer. As to the sealing of an end portion of the support means 36, there is a method in which a bag-like tube is placed over as shown in the drawing for heat seal. In addition to this method, there exist appropriate methods to be adopted including one in which a cap is placed for heat seal.

According to the pressure sensor 17 provided with the support means 36 which is constructed as has been described above, by mounting the pressure sensor 17 at a desired disposition position in an appropriate form to the purpose of a detection, a desired detection can be implemented. Then, an extent to which the deformation of the piezoelectric sensor 33 due to tensile, compression, bending or twisting force acting thereon is attenuated is reduced due to the support portion 36 being thin, and the detection sensitivity of the acceleration of a deformation is increased, thereby making it possible to realize a detection with high sensitivity. In addition, since the diameter of the sensor is small, whereby the sensor can be made small in size, the degree of freedom in placing the sensor and the degree of freedom in designing in an attempt to incorporate the sensor in other members are improved, so that the scope of the application of the pressure sensor according to the invention can be expanded.

Next, as a further form of a pressure sensor according to the invention, a form will be described in which a piezoelectric sensor is just covered without providing a support means.

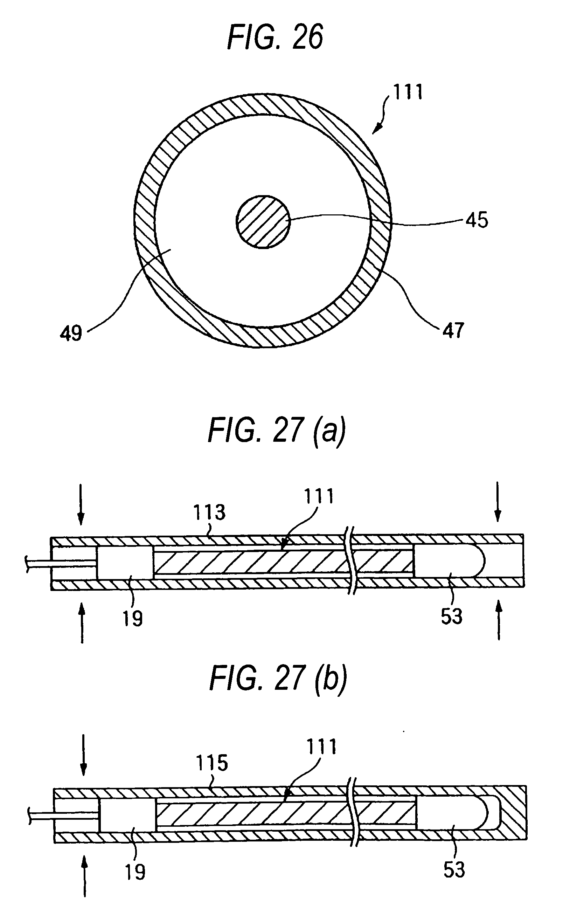

Fig. 26 shows a cross-sectional view of a piezoelectric sensor which has no covering layer and in which an external electrode 47 is exposed, and Fig. 27 shows drawings illustrating constructions in which the piezoelectric sensor shown in Fig. 26 is covered with a covering means made from thermoplastic elastomer.

A pressure sensor shown in Fig. 27(a) is such as to be formed by inserting a piezoelectric sensor 111 to which a resistor provided portion 53 and a determination means 19 are connected into a covering means 113 functioning as a sensor accommodation body which is formed into a tube-like shape which is made to open at both end portions thereof. The end portions are sealed off by heat sealing the end portions of the covering means 113 in directions indicated by arrows in the drawing.

In addition, a pressure sensor shown in Fig. 27(b) is constructed by inserting the piezoelectric sensor 111 to which the resistor provided portion 53 and the determination means 19 are connected into a tube-like covering means 115 which is closed at one end portion thereof. The end portion is sealed off by heat sealing the one end portion of the covering means 113 as indicated by arrows in the drawing. In this case, since only the one end of the covering means 113 needs to be sealed off, a sealing operation can be omitted. In addition, as to the sealing work on the end portion, in addition to the heat sealing of the end portion without any additional process, the end portion may be sealed off by placing a cap made from thermoplastic elastomer over the end portion for heat seal.

Thus, by constructing the pressure sensor using a minimum required number of members and sealing off the end portion of the covering means through heat seal, the low-cost pressure sensor can be obtained which prevents the infiltration of foreign matters such as water drops into the interior of the sensor.

Next, a pressure sensor having a piezoelectric sensor which is covered over the surface thereof by a covering means will be described by taking for example a case where a piezoelectric sensor and a covering means are extrusion molded integrally.

Fig. 28 shows explanatory drawings illustrating a way in which a covering means and a piezoelectric sensor are extrusion molded integrally and end portions thereof are sealed off.

As shown in Fig. 28(a), a piezoelectric sensor 111 in which a covering means 117 is formed from thermoplastic elastomer on the surface thereof through extrusion molding is cut to a predetermined length, and the covering means 117 at end portions of the piezoelectric sensor 111 is cut as shown in Fig. 28(b) so as to allow an external electrode at the end portions of the piezoelectric sensor 111 to be exposed. Then, as shown in Fig. 28(c), the resistor provided portion 53 and the determination means 19, which are shown in Fig. 4, are mounted to end portions of the piezoelectric sensor 117 and are, for example, as shown in Fig. 18(d), then sealed off by caps 121, 123, respectively.

Thus, the pressure sensor which prevents the infiltration of foreign matters such as water drops into the interior of the sensor through the simple operation in which the end portions of thereof are sealed off after the covering member and the piezoelectric sensor have been prepared integrally through extrusion molding and the resistor provided portion 53 and the determination means 19 have been mounted thereon.

The application of the pressure sensors according to the invention that have been described heretofore is not limited to the pressure sensor that is to be provided in the window frame of the automobile, but the pressure sensors may be applied to a sliding door in a side of the vehicle body of the automobile, a powered sunroof in the ceiling of the vehicle body, and a powered hatch door at the rear of the vehicle body, or to a powered trunk lid, a gull-wing door and an automatic opening and closing wing of a truck, and a similar advantage to what has been described before can be provided. In addition, the pressure sensors of the invention can also equally be applied not only to automobiles but also to railway cars or automatic doors in buildings. In addition, the pressure sensors of the invention can also be applied to a bumper sensor system for moving vehicles such as automatic guided vehicles and automobiles.

Note that the constructions of the respective embodiments may be combined as appropriate for use, and as to the insertion of the pressure sensing means into the sensor accommodation body, a similar function and effectiveness can be provided even in the event that the material of the sensor accommodation body is not limited to thermoplastic elastomer but other materials may be used.

While the invention has been described in detail and by reference to the specific embodiments, it is clear to those skilled in the art that various changes and modifications can be made thereto without departing from the spirit and scope of the invention.

The subject patent application is based on the Japanese Patent Application No. 2003-016404 filed on January 24, 2003 and the contents thereof is incorporated herein by reference.

### <Industrial Applicability>

According to the invention, since the sensor accommodation body which accommodates therein the pressure sensing means is made from thermoplastic elastomer and end portions thereof can easily be worked to be sealed off by thermally treating the sensor accommodation body, the pressure sensor, object detecting system and opening and closing system can be provided which realize the improvement in efficiency of the sealing work on the end portions and which are fabricated at low costs.

In addition, the pressure sensor can be fabricated without needing complex and troublesome steps by inserting the pressure sensing means into the internal surface of the sensor accommodation body with the lubricant being applied to at least either the surface of the pressure sensing means or the internal surface of the sensor accommodation body.

## Claims

1. A pressure sensor comprising pressure sensing means for detecting a deformation due to an external force and a sensor accommodation body which is made from a thermoplastic elastomer and which covers an outside of the pressure sensing means, wherein at least one end portion of the sensor accommodation body is sealed off through a thermal treatment.

2. A pressure sensor as set forth in Claim 1, wherein the pressure sensing means comprises a plurality of electrodes which an output signal generated due to deformation is made to leave and a resistor provided portion where a resistor for detecting a disconnection or short-circuit of the electrode is provided, and wherein the resistor provided portion is fixedly sealed off through a thermal treatment at the one end portion of the sensor accommodation body.

3. A pressure sensor as set forth in Claim 2, wherein the resistor provided portion includes at least one of a recessed portion, a raised portion and a wedge-shaped portion which function to enhance the fixing strength of the resistor provided portion when sealing off the end portion of the sensor accommodation body.

4. A pressure sensor as set forth in Claim 2, wherein the resistor provided portion comprises an insertion hole into which a pin is inserted for enhancing the fixing strength to the sensor accommodation body.

5. A pressure sensor as set forth in any of Claims 1 to 4, wherein at least one end portion of the pressure sensing means is covered by a cap made from a thermoplastic elastomer, and wherein the cap seals off the end portion of the sensor accommodation body.

6. A pressure sensor as set forth in any of Claims 1 to 5, wherein the sensor accommodation body is support means for the pressure sensing means which is secured to a side where the sensor is mounted and fixed, wherein the support means comprises a hollow portion which enhances the deformation of the pressure sensing means when an external force is applied, and wherein the hollow portion is sealed off through a thermal treatment at at least one end portion of the support means.

7. A pressure sensor as set forth in any of Claims 1 to 5, wherein the sensor accommodation body comprises support means which is covering means for covering the pressure sensing means, which incorporates therein the pressure sensing means covered by the covering means and which is secured to a side where the sensor is mounted and fixed, wherein the support means comprises a hollow portion which enhances the deformation of the pressure sensing means when an external force is applied, and wherein the hollow portion is sealed off through a thermal treatment at at least one end portion of the support means.

8. A pressure sensor as set forth in Claim 7, wherein the whole of at least one end portion of the support means is covered by a cap made from a thermoplastic elastomer, and wherein the cap seals off the end portion when subjected to a thermal treatment.

9. A pressure sensor as set forth in any of Claims 1 to 8, wherein the pressure sensing means is formed using a composite piezoelectric material resulting from a mixture of chlorinated polyethylene and piezoelectric ceramic powder.

10. A pressure sensor comprising pressure sensing means for detecting a deformation due to an external force and a sensor accommodation body which covers an outside of the pressure sensing means, wherein a lubricant is loaded between the pressure sensing means and the sensor accommodation body.

11. A pressure sensor as set forth in Claim 10, wherein at least one end portion of the sensor accommodation body is sealed off through a thermal treatment.

12. An object detecting system comprising the pressure sensor set forth in any of Claims 1 to 11 and determination means for determining on the contact of an object based on an output signal of the pressure sensor.

13. An object detecting system as set forth in Claim 12, wherein the determination means is fixedly sealed off through a thermal treatment at one end portion of support means.

14. An opening and closing system comprising the object detecting system set forth in Claim 12 or 13, driving means for driving an opening and closing portion and control means for controlling the driving means in such a manner as to stop a closing operation of the opening and closing portion or to operate the opening and closing portion to be opened when determination means determines on the contact of an object with a pressure sensor when the opening and closing portion is operated to be closed.

15. A pressure sensor fabricating method comprising pressure sensing means for detecting a deformation due to an external force and a sensor accommodation body which covers an outside of the pressure sensing means, the pressure sensor fabricating method including the steps of making a lubricant adhere to at least either a surface of the pressure sensing means or an internal surface of the sensor accommodation body and inserting the pressure sensing means into the interior surface of the sensor accommodation body.

16. A pressure sensor fabricating method as set forth in claim 15, wherein at least one end portion of the sensor accommodation body is sealed off through a thermal treatment after the insertion of the pressure sensing means into the sensor accommodation body.

17. A pressure sensor fabricating method as set forth in Claim 15 or 16, wherein either zinc stearate or calcium carbonate is used as the lubricant.
